# DEMANDE DE BREVET EUROPEEN

(11) **EP 2 490 442 A1**
(43) Date de publication de la demande: **22.08.2012**
(21) Numéro de dépôt: 11290097.2
(22) Date de dépôt: 18.02.2011
(51) Int. Cl.: H04N 5/445, H04N 5/00, G06Q 30/00, H04N 7/173

(54) **Procédé et système de gestion des contenus multimedia interactifs diffusés à la télévision**

(71) Demandeur: Alcatel Lucent, 75007 Paris (FR)
(72) Inventeur: Cabasse, Gilbert , Alcatel Lucent Entreprise, CS 82803 Brest (FR); Bonnaud, Fabrice , Alcatel Lucent Entreprise, CS 82803 Brest (FR)
(74) Mandataire: Demulsant, Xavier

(57) **Abrégé**

Procédé de gestion d'un contenu multimédia interactif destiné à être affiché sur l'écran d'un téléviseur (30), ce procédé comprenant les étapes suivantes
- identification d'au moins un élément interactif compris dans le contenu multimédia interactif (10) ;
- étiquetage d'une copie de l'élément interactif identifié ;
- stockage de l'élément interactif étiqueté ;
- mise à disposition de l'élément interactif stocké pour au moins un téléspectateur.

## Description

La présente invention se rapporte au media enrichi interactif.

On désigne ci-après par «téléviseur» tout récepteur apte à reproduire au moins des éléments visuels d'un contenu multimédia émis ou diffusé par un émetteur.

Par ailleurs, on appelle ci-après « télévision», tout procédé/système selon le(s)quel(s) s'opère une chaîne de diffusion d'un contenu multimédia destiné à être reçu et affiché par un téléviseur. En particulier, la télévision interactive est celle permettant la diffusion d'un contenu multimédia interactif. Un contenu multimédia interactif comprend des services interactifs permettant au téléspectateur de faire connaître une réaction personnelle et/ou d'exercer une influence sur ce qu'il voit, entend ou reçoit.

Un contenu multimédia interactif comprend, en outre du contenu audio/vidéo, des éléments interactifs. Ces éléments interactifs sont des informations additionnelles qui viennent enrichir le contenu audio/vidéo du flux de télévision habituel pour différentes motivations, par exemples, économiques (renseignements sur une offre d'un produit/service: adresse d'un site Internet, courriel, numéros de téléphone par exemple), ou informatives (commentaires/questions/réponses liés à un certain programme en diffusion, actualités, photos, résultats d'un certain évènement, noms des joueurs d'une équipe de Football par exemple).

L'affichage du contenu vidéo et des éléments interactifs est généralement fait d'une manière simultanée. Les images du contenu vidéo ne sont donc pas exclusives sur l'écran du téléviseur.

Il en résulte que, dans certains cas, une partie du contenu vidéo en lecture se trouve cachée par les éléments interactifs.

Cependant, cet affichage superposé des éléments interactifs et des images vidéo nécessite une mobilisation excessive de l'attention du téléspectateur afin de saisir les deux informations (c.à.d. les images vidéo et les éléments interactifs) tout en réussissant une lecture rapide à l'écran du téléviseur. Des tâches exigeant une charge cognitive élevée (mémoriser un numéro de téléphone, une adresse web, les conditions d'une offre commerciale par exemple) ne sont pas toujours appropriées à l'usage de la télévision, généralement associée à la détente.

Dans d'autres cas, une partie de l'écran du téléviseur peut être allouée uniquement à l'affichage des éléments interactifs (c.à.d. partager l'écran du téléviseur en deux ou plusieurs parties dont l'une affiche les éléments interactifs relatifs à un contenu vidéo en lecture dans une autre partie de l'écran).

Néanmoins, le fait de partager l'écran du téléviseur en plus d'une fenêtre conduit à la réduction des dimensions de ces fenêtres. Il en résulte que les informations affichées (c.à.d. les images vidéo et les éléments interactifs) seront de tailles réduites, et donc moins visibles que lorsqu'elles sont en plein écran.

Les méthodes connues de gestion des contenus multimédia interactifs diffusés à la télévision sont imparfaites, notamment pour les raisons suivantes :
- étant liés au contenu vidéo d'un certain programme en diffusion, les éléments interactifs ne sont plus disponibles au téléspectateur dès la fin de diffusion de ce programme, ou suite à tout changement de chaine (zapping);
- étant en diffusion, les éléments interactifs s'affichent pendant la même durée pour tous les téléspectateurs, sans considération de leurs capacités (la vitesse de lecture/compréhension/vision, d'acquisition conjointe du contenu des différents composants du contenu multimédia interactif : audio/vidéo/éléments interactifs). En même temps, les producteurs des contenus multimédia interactifs, notamment des contenus multimédia publicitaires, disposent généralement d'un temps très limité, tout en cherchant une efficacité maximale du contenu diffusé.

Un objet de la présente invention est de remédier aux inconvénients précités.

Un autre objet de la présente invention est d'améliorer l'utilité des contenus multimédia interactifs pour le téléspectateur.

Un autre objet de la présente invention est d'améliorer le rendement des investissements publicitaires à la télévision.

Un autre objet de la présente invention est de faciliter l'utilisation, et favoriser le confort et la perception des éléments interactifs des contenus média enrichis.

Un autre objet de la présente invention est de permettre une consommation collective via les réseaux sociaux des éléments interactifs des contenus multimédia.

A cette fin, l'invention se rapporte, selon un premier aspect, à un procédé de gestion d'un contenu multimédia interactif destiné à être affiché sur l'écran d'un téléviseur, ce procédé comprenant les étapes suivantes
- identification d'au moins un élément interactif compris dans le contenu multimédia interactif;
- étiquetage d'une copie de l'élément interactif identifié ;
- stockage de l'élément interactif étiqueté ;
- mise à disposition de l'élément interactif stocké pour au moins un téléspectateur.

Ce procédé comprend, en outre, une étape d'accès, depuis un terminal utilisateur, à l'élément interactif mis à disposition.

Avantageusement, l'étape d'étiquetage se fait d'une manière automatique en utilisant au moins une information récupérée depuis le guide de programme électronique associé au contenu multimédia interactif. L'invention se rapporte, selon un deuxième aspect, à un système de gestion d'un contenu multimédia interactif destiné à être affiché sur l'écran d'un téléviseur, ce système comprenant
- un module de sélection chargé d'identifier au moins un élément interactif compris dans le contenu multimédia interactif;
- un module d'étiquetage chargé d'étiqueter une copie l'élément interactif identifié ;
- une base de données pour y stocker l'élément interactif étiqueté ;
- une interface permettant l'accès au contenu de la base de données.

Ce système comprend en outre un terminal utilisateur, pourvu d'une application logicielle, permettant d'accéder au contenu de la base de données.

L'invention propose, selon un troisième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

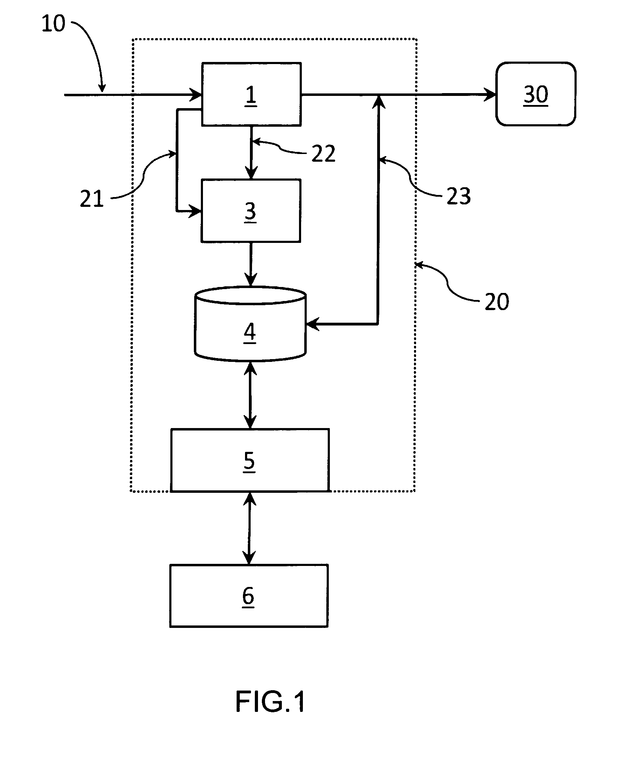

D'autres caractéristiques et avantages de l'invention apparaîtront plus clairement et de manière concrète à la lecture de la description ci-après de modes de réalisation préférés, laquelle est faite en référence à la figure 1 annexée qui illustre schématiquement une représentation fonctionnelle d'un mode de réalisation.

Sur la figure 1 est représenté un adaptateur 20 (aussi désigné par le vocable décodeur, récepteur numérique ou STB pour Set-top Box) recevant en temps réel un contenu multimédia interactif 10 destiné à être affiché sur l'écran du téléviseur 30.

L'adaptateur 20 est tout moyen permettant de transformer un signal à son entrée en un contenu qui peut être affiché sur l'écran du téléviseur 30.

Le contenu multimédia interactif 10 comprend des éléments interactifs. Le flux du contenu multimédia interactif 10 peut provenir en temps réel d'un câble Ethernet (IPTV par exemple), d'une antenne satellite ou VHF/UHF, d'une ligne téléphonique, d'une fibre optique, ou plus généralement d'un moyen de transmission local/distant de contenus numériques.

Le flux du contenu multimédia interactif 10 correspond à celui d'un programme d'une chaine de télévision. Ce flux comprend le guide de programme électronique (ou, en anglais, EPG pour Electronic Program Guide). L'EPG comprend des informations sur le programme en diffusion.

Le module de sélection 1 identifie, ensuite communique les éléments interactifs, ou de préférence une copie des éléments interactifs, du contenu multimédia interactif 10 au module d"étiquetage 3 (lien 22 sur la figure 1).

Dans un mode de réalisation, le module de sélection 1 communique aussi, au module d'étiquetage 3 (lien 21 sur la figure 1), des informations concernant le contenu multimédia interactif 10 en diffusion. A titre d'exemples non-limitatifs, ces informations, récupérées depuis l'EPG, peuvent comprendre le nom de la chaine, le nom du programme en diffusion, des mots clés relatifs au programme en diffusion, l'heure.

Le module d'étiquetage 3 ajoute des tags (aussi dits des étiquettes, ou des marques) aux éléments interactifs qui lui sont communiqués depuis le module de sélection 1. Il en résulte que l'étiquetage se fait d'une manière automatique.

Le mode d'étiquetage 3 utilise les informations qui lui sont transmises (lien 21 sur la figure 1) par le module de sélection 1 pour étiqueter les éléments interactifs, qui eux aussi lui parviennent (lien 22 sur la figure 1) depuis le module de sélection 1.

En variante ou en combinaison, le téléspectateur apporte, à son initiative, des tags au module d'étiquetage 3 pour étiqueter les éléments interactifs qui lui sont transmis depuis le module de sélection 1. Dans un mode de réalisation, le téléspectateur peut disposer d'un ensemble extensible de tags (bookmark) pour tagguer (étiqueter) les éléments interactifs.

Les éléments interactifs peuvent être déjà étiquetés par l'émetteur du contenu multimédia interactifs 10. L'émetteur du contenu multimédia interactif 10 peut aussi fournir des étiquettes, par exemple "publicité" "marque=Peugeot®", "nom du réalisateur=Woody Allen", "titre=score". Notamment, une étiquette peut être un mot clé, une catégorie d'éléments interactifs (publicité, actualité, question/réponse par exemple), un nom de marque, permettant ainsi un affichage par colonne, une recherche ou un tri des éléments interactifs.

Dans un mode de réalisation, le module d'étiquetage 3 récupère des étiquettes depuis une source d'étiquettes distante qui lui est indiquée par défaut, ou par le téléspectateur. Un site internet/intranet, une base de données extérieure au système sont des exemples de source d'étiquettes. A titre d'exemple non limitatif, un téléspectateur souhaitant avoir, en sa langue, les éléments interactifs d'un certain programme de télévision diffusé en langue étrangère, peut spécifier lors d'une étape de configuration du système, l'adresse d'un site internet relatif au programme en diffusion (un site web fournissant un guide TV par exemple).

Une fois étiquetés, les éléments interactifs sont stockés dans une base de données 4, dans une mémoire cache, ou dans toute autre moyen permettant de mémoriser, au moins temporairement, ces éléments interactifs taggués.

En variante ou en combinaison, une copie d'au moins une partie (une séquence vidéo et/ou audio) du contenu audio et/ou vidéo du contenu multimédia interactif 10 est stockée avec les éléments interactifs correspondants dans la base de données 4 (lien 23 sur la figure 1). Ceci permet notamment de pouvoir réafficher un contenu multimédia interactif stocké en entier (un contenu multimédia publicitaire comprenant des éléments interactifs indiquant les détails d'une offre et des adresses, une séquence vidéo comprenant des éléments interactifs indiquant la liste des joueurs au début d'un match de football, une séquence vidéo d'un but dans un match de football comprenant des éléments interactifs indiquant le score, le temps, et le nom du joueur qui a marqué le but, une séquence vidéo répondant à une question indiquée dans les éléments interactifs par exemple).

Les éléments interactifs étiquetés peuvent être stockés par nom, par programmes, par chaine, ou par mot-clé par exemple.

Dans un mode de réalisation, les éléments interactifs sont représentés par des nuages de tag (« tag cloud » en anglais) en fonction de mots-clés (publicité, sport, questions/réponses, offres, adresses par exemple).

De préférence, la base de données 4 comprend un profil de préférences à remplir en début de visionnage des éléments interactifs, qui s'adapte automatiquement en fonction des préférences de l'utilisateur (évolution dynamique en fonction des choix antérieurs). Ce profil vise à permettre d'adapter l'affichage (tri par tag, nuage de tags, liste par exemple), et la gestion (droits d'accès par exemple) du contenu de la base de données 4 aux préférences du téléspectateur.

Une interface 5 permet d'accéder et de rechercher dans les éléments interactifs étiquetés et stockés dans la base de données 4.

L'interface 5 est pourvue de critères permettant de filtrer les contenus interactifs et de moyens d'affichage des résultats de recherche dans les éléments interactifs stockés (sous forme de nuage de tags ou d'une liste par exemple).

L'interface 5 est pourvue d'un moyen d'exploration (un moteur de recherche, un outil de navigation avec plusieurs interface(s) graphique(s) par exemple) de la base de données 4 permettant d'y retrouver rapidement un élément interactif en fonction des tags.

L'interface 5 permet, en outre, l'accès à distance au contenu de la base de données 4 à l'aide d'un terminal utilisateur 6. Pour cela, l'interface 5 est pourvue d'une interface de connexion. Cette interface de connexion peut être une connexion sans fil (Bluetooth^{TM} , HiperLAN, Wireless LAN, Home RF, WiFi and ZigBee, GSM, GPRS, W-CDMA, WiMAX par exemple) ou filaire (Ethernet par exemple).

Avantageusement, l'interface 5 permet un accès/usage collectif et individuel au/du contenu de la base de données 4 (c.à.d. dans cas d'une utilisation simultané par plusieurs téléspectateurs des contenus interactifs stockés dans la base de données 4, chacun peut consulter le contenu qu'il souhaite sans pour autant perturber les autres).

Le terminal utilisateur 6 peut être notamment un terminal utilisateur mobile (un Smartphone, un ordinateur portable, un Laptop, un PDA (Personal Assistant Agent) par exemple), ou fixe (un ordinateur de bureau par exemple). Le téléspectateur peut ainsi explorer et regarder, à partir de son terminal mobile, l'ensemble des éléments interactifs stockés dans la base de données 4.

Dans un mode de réalisation, une application logicielle est développée pour le terminal utilisateur 6 (notamment pour les Smartphones et pour les ordinateurs portables) permettant le téléspectateur d'accéder/modifier le contenu de la base de données 4. A partir d'une interface graphique de l'application logicielle, le téléspectateur peut, par exemple, rechercher, afficher, modifier, supprimer, ou regarder un élément interactif stocké dans la base de données 4.

De préférence, l'application logicielle installée sur le terminal utilisateur 6 utilise/coordonne avec d'autres services/moyens (de messagerie électronique, de géolocalisation, de navigation Web, de communication par exemple) proposés par ce terminateur utilisateur 6. A titre d'exemples non limitatifs, cette application permet
- d'appeler un contact en utilisant un numéro de téléphone compris dans un élément interactif ;
- d'envoyer un courriel en utilisant une adresse électronique comprise dans un élément interactif ;
- de localiser un adresse, ou trouver l'itinéraire vers une adresse comprise dans un élément interactif ;
- de visiter un site Web dont l'adresse est comprise dans un élément interactif.

De préférence, l'application logicielle installée sur le terminal utilisateur 6 pour accéder au contenu de la base de données 4 comprend une interface de communication avec les réseaux sociaux (Facebook, MySpace, Twitter, Google Buzz par exemple) et les plateformes de partage de contenus multimédia (Youtube, DailyMotion par exemple) permettant le téléspectateur de se voir proposer des contenus interactifs appréciés par ses amis ou de leur en suggérer à partir de la base de données 4.

Il est à noter que l'affichage des éléments interactifs stockés dans la base de données 4 peut se faire sur l'écran du téléviseur 30 (lien 23 sur la figure 1) ou celui du terminal utilisateur 6 si ce terminal en dispose.

A titre d'exemple non-limitatif d'application de la méthode décrite ci-dessus, un téléspectateur qui a déjà regardé un contenu multimédia publicitaire à la télévision ne se rappelle pas des adresses des points de vente de ce produit, ces adresses ayant été indiquées dans un élément interactif de ce contenu. Dans ce cas, le téléspectateur
- lance depuis son Smartphone 6 l'application logicielle permettant d'accéder à distance à son adaptateur (STB) 20,
- recherche dans la base de données 4 l'élément interactif (en utilisant le nom de la chaine de télévision dans laquelle a été diffusé ce contenu, la date à laquelle il a regardé ce contenu, l'objet de ce contenu par exemple) ;
- extrait les adresses des points de vente compris dans l'élément interactif ;
- requiert l'itinéraire vers chacun des points de vente sélectionnés à partir de sa position géographique actuelle (en utilisation un moyen de géolocalisation fourni par le Smartphone 6).

La plupart des adaptateurs (STB) 20 permettent d'embarquer des fonctionnalités telles l'enregistrement de contenus multimédia, ou des systèmes d'exploitation permettant la gestion des contenus multimédia qui y sont stockés, et la commande du téléviseur 30. Par conséquent, avantageusement, l'implémentation de la méthode décrite ci-dessus ne requiert pas beaucoup de modification dans les adaptateurs existants.

Le procédé et le système qui viennent d'être décrits présentent un certain nombre d'avantages. Ils permettent en effet
- d'améliorer le rendement d'un contenu multimédia publicitaire : un affranchissement par rapport à la grille horaire (le téléspectateur peut regarder le contenu multimédia publicitaire ou au moins ses éléments interactifs à l'heure qui lui convient). Le fait de rendre disponible à tout moment les détails d'une offre commerciale (adresse du magasin, taux de réduction, adresse du site Web, avantages de l'offre par exemple) favorise un meilleur rendement ;
- de changer (zapper) d'une chaine à une autre tout en regardant les éléments interactifs relatifs à un contenu multimédia qui a été diffusé (ou qui est en diffusion, si l'adaptateur 20 est bi-tuner,) sur une autre chaine ;
- de revoir un contenu multimédia interactif dont on s'est rendu compte de l'importance après-coup ou lorsqu'on a été occupé au moment de sa diffusion ;
- de regarder, si l'adaptateur 10 est « double tuner »

Il est à noter que les termes « module » et « interface » recouvrent ici tout moyen intégrant un processeur programmé pour assurer une ou plusieurs fonctions prédéterminées, ou toute application logicielle (programme ou sous-programme, plugin) implémentée sur un processeur, indépendamment ou en combinaison avec d'autres applications logicielles.

## Revendications

1. Procédé de gestion d'un contenu multimédia interactif destiné à être affiché sur l'écran d'un téléviseur (30), ce procédé comprenant les étapes suivantes
- identification d'au moins un élément interactif compris dans le contenu multimédia interactif (10) ;
- étiquetage d'une copie de l'élément interactif identifié ;
- stockage de l'élément interactif étiqueté ;
- mise à disposition de l'élément interactif stocké pour au moins un téléspectateur.

2. Procédé selon la revendication 1, **caractérisé en ce qu'**il comprend en outre une étape d'accès, depuis un terminal utilisateur (6), à l'élément interactif mis à disposition.

3. Procédé selon la revendication 2, **caractérisé en ce qu'**il comprend en outre une étape d'utilisation d'au moins un service proposé par le terminal utilisateur (6).

4. Procédé selon la revendication 3, **caractérisé en ce que** le service utilisé est un service de géolocalisation permettant de trouver un itinéraire vers une adresse comprise dans l'élément interactif.

5. Procédé selon l'une quelconques des revendications précédentes, **caractérisé en ce que** l'étape d'étiquetage utilise au moins une information récupérée depuis le guide de programme électronique associé au contenu multimédia interactif.

6. Procédé selon l'une quelconques des revendications précédentes, **caractérisé en ce que** l'étape d'étiquetage utilise au moins une information apportée par le téléspectateur.

7. Procédé selon l'une quelconques des revendications précédentes, **caractérisé en ce que** l'étape d'étiquetage utilise au moins une information récupérée depuis une source d'étiquettes distante.

8. Procédé selon l'une quelconque des revendications précédentes, **caractérisé en ce qu'**une copie d'une partie du contenu multimédia interactif (10) est stockée en association avec l'élément interactif étiqueté.

9. Système de gestion d'un contenu multimédia interactif (10) destiné à être affiché sur l'écran d'un téléviseur (30), ce système comprenant
- un module de sélection (1) chargé d'identifier au moins un élément interactif compris dans le contenu multimédia interactif (10);
- un module d'étiquetage (3) chargé d'étiqueter une copie l'élément interactif identifié ;
- une base de données (4) pour y stocker l'élément interactif étiqueté ;
- une interface (5) permettant l'accès au contenu de la base de données (4).

10. Système selon la revendication 9, **caractérisé en ce que** le module d'étiquetage (3) utilise au moins une information récupérée depuis le guide de programme électronique associé au contenu multimédia interactif.

11. Système selon l'une quelconque des revendications 9 ou 10, **caractérisé en ce que** le module de sélection (1), le module d'étiquetage (3), la base de données (4) et l'interface (5) sont compris dans un adaptateur (20) associé au téléviseur (30).

12. Système selon l'une quelconque des revendications 9 à 11, **caractérisé en ce qu'**il comprend en outre un terminal utilisateur (6) permettant d'accéder au contenu de la base de données (4).

13. Système selon la revendication 12, **caractérisé en ce que** le terminal utilisateur (6) est pourvu d'une application logicielle permettant l'accès au contenu de la base de données (4).

14. Système selon la revendication 13, **caractérisé en ce que** l'application logicielle utilise au moins un service proposé par le terminal utilisateur (6).

15. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 8.
